# EUROPÄISCHE PATENTSCHRIFT

(11) **EP 0 825 057 B1**
(45) Veröffentlichungstag und Bekanntmachung des Hinweises auf die Patenterteilung: **09.04.2003**
(21) Anmeldenummer: 97202488.9
(22) Anmeldetag: 12.08.1997
(51) Int. Cl.: B60K 37/02, F16B 21/12

(54) **Vorrichtung zur drehbaren Lagerung von Gegenständen um eine Drehachse**
Device for rotatably supporting objects about an axis of rotation
Dispositif pour le support rotatif d'objets autour d'un axe de rotation

(30) Priorität: 16.08.1996 DE 19633003
(43) Veröffentlichungstag der Anmeldung: 25.02.1998
(73) Patentinhaber: Siemens Aktiengesellschaft, 80333 München (DE)
(72) Erfinder: Schilling, Uwe, Dr., Röntgenstrasse 24, 22335 Hamburg (DE); Rudolph, Martin, Dr., Röntgenstrasse 24, 22335 Hamburg (DE); Voit, Stefan, Röntgenstrasse 24, 22335 Hamburg (DE)

(56) Entgegenhaltungen:
- EP-A- 0 615 883
- DE-U- 29 603 197
- GB-A- 2 019 627
- PATENT ABSTRACTS OF JAPAN vol. 014, no. 347 (M-1002), 26. Juli 1990 (1990-07-26) & JP 02 120151 A (HITACHI LTD;OTHERS: 01), 8. Mai 1990 (1990-05-08)

## Beschreibung

### Vorrichtung zur drehbaren Lagerung von Gegenständen um eine Drehachse

Die Erfindung betrifft eine Vorrichtung zur drehbaren Lagerung von Gegenständen um eine Drehachse, insbesondere von Anzeigevorrichtungen in Kraftfahrzeugengemäß dem Oberbegriff von Anspruch 1.

Derartige Vorrichtungen sind beispielsweise aus EP 0 615 883 oder GB 2 019 627 bekannt und werden z.B. eingesetzt, um die Displays von Navigationssystemen drehbar zu lagern. Bei dem Navigationssystem CARIN der Fa. Philips ist das Display mittels einer komplexen Halterung mit zwei Drehachsen am Armaturenbrett gelagert. Andere Hersteller von Navigationssystemen verwenden Kugelgelenke zur Lagerung des Displays. Beide Lösungen sind aufwendig und teuer. Das Entnehmen des Displays aus der Halterung ist bei beiden Lösungen schwierig und umständlich. Um die Position des Displays zu verstellen, müssen Schrauben oder Hebel gelöst werden und anschließend nach Verstellung wieder festgezogen werden.

Es ist Aufgabe der vorliegenden Erfindung, eine Vorrichtung der eingangs genannten Art zu schaffen, die einfach und kostengünstig ist und ein einfaches und schnelles Entnehmen des Gegenstandes ermöglicht.

Diese Aufgabe ist erfindungsgemäß dadurch gelöst, daß ein Grundkörper mit einer in radialer Richtung geöffneten Einbuchtung vorgesehen ist, daß ein Drehkörper zum Einschieben in radialer Richtung in die Einbuchtung und zur drehbaren Lagerung in der Einbuchtung vorgesehen ist, daß ein Haltebügel vorgesehen ist, mittels dessen der Drehkörper in der Einbuchtung gegen radiale Bewegungen verriegelbar ist, und daß der Drehkörper mit dem Gegenstand drehfest koppelbar ist, so daß sich der Drehkörper bei Drehung des Gegenstandes in dem Grundkörper mitdreht und daß der Halkbügel durch radiales verschwenken wieder entriegelbar ist.

Unter drehfester Kopplung wird verstanden, daß eine Drehbewegung des Gegenstandes unmittelbar eine Drehbewegung des Drehkörpers hervorruft. Dies kann z.B. dadurch realisiert werden, daß der Drehkörper und der Gegenstand fest miteinander verbunden, z.B. verschraubt sind. Eine drehfeste Kopplung kann aber beispielsweise auch dadurch realisiert werden, daß der Gegenstand Führungsstifte bzw. Führungsbolzen aufweist, die in Führungsnuten des Drehkörpers eingeklemmt oder eingeklickt sind.
Zur drehbaren Lagerung des Gegenstandes werden der Drehkörper und der mit diesem drehfest verbundene Gegenstand von der Hand einer Bedienperson in radialer Richtung, d.h. senkrecht zu der Drehachse, in die Einbuchtung des Grundkörpers eingeschoben. Danach wird der Drehkörper mittels des Haltebügels in der Einbuchtung gegen radiale Bewegungen verriegelt, wodurch der Drehkörper und der Gegenstand drehbar in dem Grundkörper gelagert sind.

Diese Vorrichtung ist einfach und kostengünstig herzustellen. Der Drehkörper und der Gegenstand können durch radiales Wegschwenken des Haltebügels in radialer Richtung aus dem Grundkörper entnommen werden und genauso einfach in umgekehrter Weise wieder in dem Grundkörper drehbar gelagert werden.

Bei einer vorteilhaften Ausgestaltung der Erfindung ist vorgesehen, daß der Drehkörper in axialer Richtung wenigstens einen ersten und einen zweiten von dem ersten verschiedenen jeweils kreisförmigen Querschnitt aufweist, daß die Einbuchtung des Grundkörpers in axialer Richtung einen dritten Querschnitt aufweist, der wenigstens teilweise im wesentlichen dem ersten Querschnitt identisch ist und daß die Einbuchtung des Grundkörpers in axialer Richtung einen vierten Querschnitt aufweist, der wenigstens teilweise im wesentlichen dem zweiten Querschnitt identisch ist, so daß der Drehkörper in der Einbuchtung des Grundkörpers gegen axiale Verschiebungen sicherbar ist.

Mittels einer derartigen Ausgestaltung des Drehkörpers und des Grundkörpers kann der Drehkörper sehr einfach in dem Grundkörper gegen axiale Verschiebungen gesichert werden. Der Drehkörper weist in Richtung der Drehachse einen ersten kreisförmigen Querschnitt mit einem ersten Durchmesser und einen zweiten kreisförmigen Querschnitt mit einem zweiten, von dem ersten verschiedenen Durchmesser auf. Die Einbuchtung des Grundkörpers ist dazu äquivalent ausgebildet und weist dementsprechend einen dritten teilkreisförmigen Querschnitt auf, dessen Durchmesser im wesentlichen dem Durchmesser des ersten Querschnitts entspricht. Ferner weist die Einbuchtung des Grundkörpers einen vierten teilkreisförmigen Querschnitt auf, dessen Durchmesser im wesentlichen dem Durchmesser des zweiten Querschnitts des Drehkörpers entspricht. Infolge der unterschiedlichen Durchmesser der Querschnitte wird der Drehkörper an dem Übergang zwischen den verschiedenen Querschnitten gegen axiale Bewegungen gesichert. Eine zusätzliche axiale Sicherung des Drehkörpers kann durch den Haltebügel erfolgen.

Eine weitere vorteilhafte Ausgestaltung der Erfindung ist dadurch gekennzeichnnet, daß der Haltebügel drehbar an dem Grundkörper angelagert ist.

Eine drehbare Lagerung des Haltebügels an dem Grundkörper läßt sich sehr einfach realisieren, z.B. dadurch, daß der Haltebügel einen Drehzapfen aufweist, der in eine kreisförmige Bohrung des Grundkörpers eingreift.

Eine weitere vorteilhafte Ausgestaltung der Erfindung ist dadurch gekennzeichnet, daß die Einbuchtung des Grundkörpers in axialer Richtung als Durchbruch ausgebildet ist, daß der Grundkörper zur Befestigung an einem Basiselement vorgesehen ist und daß die Oberfläche des Basiselementes eine radial verlaufende Führungsfläche für den Drehkörper bildet.

Der Grundkörper kann an dem Basiselement z.B. mittels Schraubverbindungen, Klebeverbindungen oder Schweißverbindungen befestigt werden. Das Basiselement kann z.B. ein biegbarer Schwanenhals, ein Teil des Armaturenbrettes eines Kraftfahrzeuges oder ein sonstiges feststehendes Element im Innenraum des Kraftfahrzeugs sein. Dadurch, daß die Oberfläche des Basiselementes als Führungsfläche für den Drehkörper genutzt wird, kann der Grundkörper sehr dünn ausgebildet werden. Dies bedingt eine Material- und eine Kosteneinsparung.

Diese Ausgestaltung der Erfindung kann vorteilhaft dadurch weitergebildet werden, daß die Oberfläche des Basiselementes im Bereich der Führungsfläche plan ausgebildet ist.

Ist die Oberfläche des Basiselementes im Bereich der Führungsfläche plan, d.h. eben ausgebildet, so kann in diesem Bereich auch der Grundkörper eben ausgebildet werden. Dies ist fertigungstechnisch besonders günstig. Der Grundkörper kann jedoch auch so ausgeführt werden, daß durch ein entsprechendes Profil keine plane Oberfläche des Basiselementes erforderlich ist.

Bei einer weiteren vorteilhaften Ausgestaltung der Erfindung ist vorgesehen, daß der Haltebügel einen Rasthaken aufweist, der in eine Rastöffnung des Grundkörpers einrastbar ist.

Mittels eines derartigen Rasthakens und einer Rastöffnung kann der Haltebügel sehr einfach verriegelt und auch wieder entriegelt werden.

Bei einer weiteren vorteilhaften Ausgestaltung der Erfindung ist vorgesehen, daß der Drehkörper einstückig mit dem Gegenstand und/oder der Grundkörper einstückig mit dem Basiselement ausgebildet sind.

Die erfindungsgemäße Vorrichtung läßt sich vorzugsweise zur drehbaren Lagerung eines elektronischen Gerätes, zur drehbaren Lagerung einer Anzeigevorrichtung eines Navigationssystems oder zur drehbaren Lagerung einer Anzeigevorrichtung eines Fernsehsystems eines Kraftfahrzeugs verwenden.

Ein Ausführungsbeispiel der Erfindung wird nachfolgend anhand der Zeichnung in den Fig. 1 bis 3 näher erläutert. Es zeigen:
Fig. 1 eine schematische Darstellung des Ausführungsbeispiels in Seitenansicht mit einem Bildschirm, der mittels eines Drehkörpers und eines Grundkörpers drehbar an einem Basiselement gelagert ist,
Fig. 2 eine schematische Darstellung des Ausführungsbeispiels in Draufsicht, wobei der Drehkörper sich außerhalb einer Einbuchtung des Grundkörpers befindet und ein Haltebügel eine entriegelte Position einnimmt,
Fig. 3 eine schematische Darstellung des Ausführungsbeispiels in Draufsicht, wobei der Drehkörper sich in der Einbuchtung des Grundkörpers befindet und der Haltebügel eine verriegelte Position einnimmt.

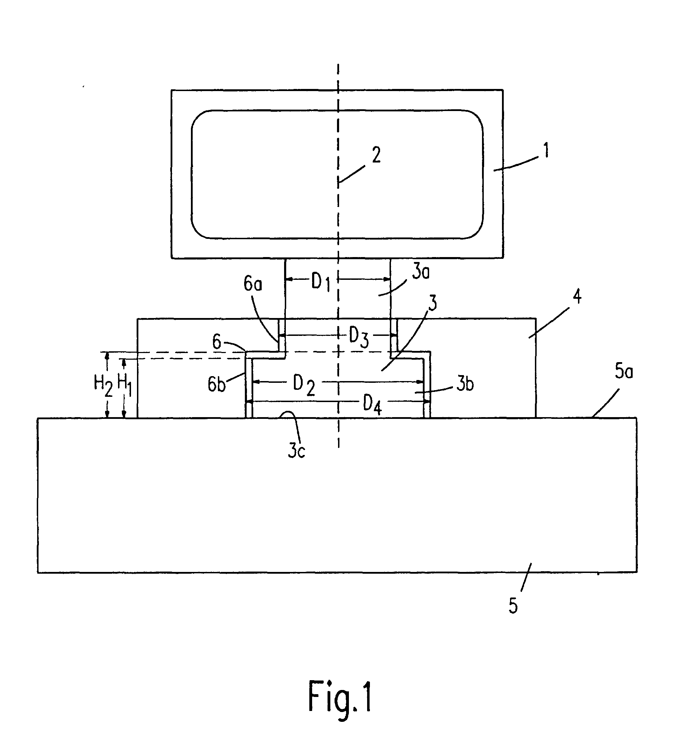

Die schematische Darstellung in Fig. 1 zeigt eine Vorrichtung zur drehbaren Lagerung eines Gegenstandes. Als Gegenstand ist ein Bildschirm 1 zur drehbaren Lagerung um eine Drehachse 2 vorgesehen. Der Bildschirm 1 kann z.B. ein Anzeigebildschirm eines Navigationssystems eines Kraftfahrzeuges oder ein Bildschirm eines Fernsehsystems eines Kraftfahrzeuges sein. An dem Bildschirm 1 ist ein Drehkörper 3 auf nicht näher dargestellte Weise befestigt. Eine derartige Befestigung kann vorzugsweise mittels Schraubverbindungen realisiert werden. Der Drehkörper 3 ist zylindrisch ausgeformt und weist in einem ersten Abschnitt 3a einen ersten Außendurchmesser D₁, in einem zweiten Abschnitt 3b einen zweiten Außendurchmesser D₂ auf, wobei der Außendurchmesser D₁ kleiner als der Außendurchmesser D₂ ist. Der Drehkörper 3 weist eine Unterseite 3c auf. Es ist ein Grundkörper 4 vorgesehen, der an einem eine Oberseite 5a aufweisendem Basiselement 5 befestigt ist. Die Befestigung des Grundkörpers 4 an dem Basiselement 5 kann vorzugsweise mittels Schraubverbindungen erfolgen. Das Basiselement 5 kann z.B. ein bewegbarer Schwanenhals oder das Armaturenbrett eines Kraftfahrzeuges sein. Der Grundkörper 4 weist einen Durchbruch 6 auf, der teilkreisförmig ausgebildet ist und in einem ersten Abschnitt 6a einen ersten Innendurchmesser D₃ und in einem zweiten Abschnitt 6b einen zweiten Innendurchmesser D₄ aufweist. Der erste Innendurchmesser D₃ des Grundkörpers 4 ist geringfügig größer gewählt als der erste Außendurchmesser D₁ des Drehkörpers 3, und der zweite Innendurchmesser D₄ des Grundkörpers 4 ist geringfügig größer gewählt als der zweite Außendurchmesser D₂ des Drehkörpers 3.

Der zweite Abschnitt 3b des Drehkörpers 3 weist eine axiale Höhe H₁ in Richtung der Drehachse 2 auf, und der zweite Abschnitt 6b des Druchbruchs 6 des Grundkörpers 4 weist eine axiale Höhe H₂ in Richtung der Drehachse 2 auf. Die axiale Höhe H₂ des zweiten Abschnitts 6b des Durchbruchs 6 ist geringfügig größer als die axiale Höhe H₁ des zweiten Abschnitts 3b des Drehkörpers 3. Somit ist der Drehkörper 3 formschlüssig in den Durchbruch 6 des Grundkörpers 4 eingepaßt. Die Oberseite 5a des Basiselementes 5 wirkt als Führungsfläche für die Unterseite 3c des Drehkörpers 3.

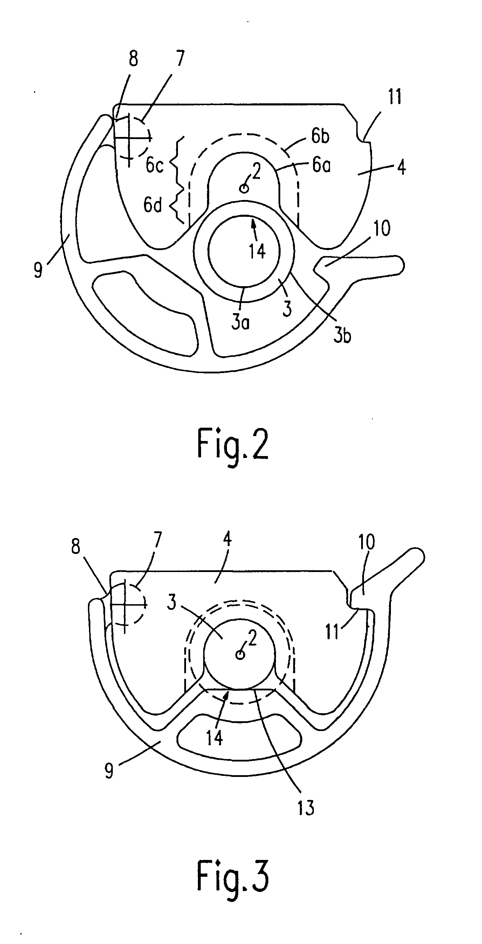

Fig. 2 zeigt eine Draufsicht auf den Grundkörper 4 und den Drehkörper 3 gemäß Fig. 1, wobei der Bildschirm 1 und das Basiselement 5 aus Gründen der Übersichtlichkeit nicht dargestellt sind. Der Grundkörper 4 weist eine zylinderförmige Nut 7 auf, in der ein zylinderförmiger Stift 8 eines Haltebügels 9 drehbar gelagert ist. Der Haltebügel 9, der Stift 8 sowie die zylinderförmige Nut 7 sind in der Fig. 1 aus Gründen der Übersichtlichkeit nicht dargestellt. Der Druchbruch 6 des Grundkörpers 4 ist in radialer Richtung, d.h. senkrecht zu der Drehachse 2 als einseitig geöffnete Einbuchtung 14 ausgebildet und weist einen teilkreisförmigen Abschnitt 6c auf, der in einen Öffnungsabschnitt 6d übergeht.

In Fig. 2 befindet sich der Drehkörper 3 außerhalb des teilkreisförmigen Abschnitts 6c des Grundkörpers 4, und der Haltebügel 9 befindet sich in einer nicht verriegelten Position, so daß der Haltebügel 9 im Uhrzeigersinn weggeschwenkt werden kann und der Drehkörper 3 und damit auch der an diesem befestigte Bildschirm 1, der in der Fig. 2 nicht dargestellt ist, aus dem Durchbruch 6 des Grundkörpers 4 entnommen werden kann.

Fig. 3 zeigt eine schematische Draufsicht gemäß Fig. 2, wobei sich der Haltebügel 9 und der Drehkörper 3 in einer verriegelten Position befinden. Hierzu ist der Drehkörper 3 in radialer Richtung, d.h. senkrecht zu der Drehachse 2 in den Durchbruch 6 des Grundkörpers 4 eingeschoben worden. Der Haltebügel 9 ist bezüglich der in der Fig. 2 dargestellten Stellung im Gegenuhrzeigersinn verschwenkt worden und gegenüber dem Grundkörper 4 verriegelt worden. Hierzu weist der Haltebügel 9 eine Rastnase 10 auf, die in eine Rastöffnung 11 des Grundkörpers 4 geklemmt worden ist. Eine Anschlagkante 13 des Haltebügels 9 drückt in dieser verriegelten Stellung gegen den Abschnitt 3a des Drehkörpers 3, wodurch der Drehkörper 3 gegen radiale Bewegungen senkrecht zu der Drehachse 2 gesichert ist. In Richtung der Drehachse 2 ist der Drehkörper 3 infolge der unterschiedlichen Durchmesser der Abschnitte 3a und 3b des Drehkörpers 3 bzw. der Abschnitte 6a und 6b des Durchbruchs 6 gesichert. Somit ist der Drehkörper 3 und damit der an dem Drehkörper 3 befestigte Bildschirm 1 in der in Fig. 3 gezeigten Darstellung drehbar an dem Grundkörper 4 und dem Basiselement 5 angelagert.
Durch Verschwenken des Haltebügels 9 im Uhrzeigersinn kann der Drehkörper 3 entriegelt werden, und der Monitor 1 und der Drehkörper 3 können sehr einfach seitlich aus dem Durchbruch 6 bzw. der Einbuchtung 14 des Grundkörpers 4 entnommen werden.

## Patentansprüche

1. Vorrichtung zur drehbaren Lagerung von Gegenständen (1) um eine Drehachse (2), insbesondere von Anzeigevorrichtungen in Kraftfahrzeugen, **dadurch gekennzeichnet,**
**daß** ein Grundkörper (4) mit einer in radialer Richtung geöffneten Einbuchtung (14) vorgesehen ist,
**daß** ein Drehkörper (3) zum Einschieben in radialer Richtung in die Einbuchtung (14) und zur drehbaren Lagerung in der Einbuchtung (14) vorgesehen ist,
**daß** ein Haltebügel (9) vorgesehen ist, mittels dessen der Drehkörper (3) in der Einbuchtung (14) gegen radiale Bewegungen verriegelbar ist, und
**daß** der Drehkörper (3) mit dem Gegenstand (1) drehfest koppelbar ist, so daß sich der Drehkörper (3) bei Drehung des Gegenstandes (1) in dem Grundkörper (4) mitdreht und daß der Halkbügel (9) durch radicales Verschwenken wieder entriegelbar ist.

2. Vorrichtung nach Anspruch 1, **dadurch gekennzeichnet,**
**daß** der Drehkörper (3) in axialer Richtung wenigstens einen ersten und einen zweiten von dem ersten verschiedenen jeweils kreisförmigen Querschnitt aufweist,
**daß** die Einbuchtung (14) des Grundkörpers (4) in axialer Richtung einen dritten Querschnitt aufweist, der wenigstens teilweise im wesentlichen dem ersten Querschnitt identisch ist und daß die Einbuchtung (14) des Grundkörpers (4) in axialer Richtung einen vierten Querschnitt aufweist, der wenigstens teilweise im wesentlichen dem zweiten Querschnitt identisch ist, so daß der Drehkörper (3) in der Einbuchtung (14) des Grundkörpers (4) gegen axiale Verschiebungen sicherbar ist.

3. Vorrichtung nach Anspruch 1 oder 2, **dadurch gekennzeichnet,**
**daß** der Haltebügel (9) drehbar an dem Grundkörper (4) angelagert ist.

4. Vorrichtung nach einem der Ansprüche 1 bis 3, **dadurch gekennzeichnet,**
**daß** die Einbuchtung (14) des Grundkörpers (4) in axialer Richtung als Durchbruch (6) ausgebildet ist, daß der Grundkörper (4) zur Befestigung an einem Basiselement (5) vorgesehen ist und daß die Oberfläche (5a) des Basiselementes (5) eine radial verlaufende Führungsfläche für den Drehkörper (3) bildet.

5. Vorrichtung nach Anspruch 4, **dadurch gekennzeichnet,**
**daß** die Oberfläche (5a) des Basiselementes (5) im Bereich der Führungsfläche plan ausgebildet ist.

6. Vorrichtung nach einem der Ansprüche 1 bis 5, **dadurch gekennzeichnet,**
**daß** der Haltebügel (9) einen Rasthaken (10) aufweist, der in eine Rastöffnung (11) des Grundkörpers (4) einrastbar ist.

7. Vorrichtung nach einem der Ansprüche 1 bis 6, **dadurch gekennzeichnet,**
**daß** der Drehkörper (3) einstückig mit dem Gegenstand (1) und/oder der Grundkörper (4) einstückig mit dem Basiselement (5) ausgebildet sind.

8. Elektronisches Gerät mit einer Vorrichtung nach einem der Ansprüche 1 bis 7.

9. Navigationssystem mit einer Anzeigevorrichtung, welche mittels einer Vorrichtung nach einem der Ansprüche 1 bis 7 drehbar gelagert ist.

10. Fernsehsystem eines Kraftfahrzeuges mit einer Anzeigevorrichtung, welche mittels einer Vorrichtung nach einem der Ansprüche 1 bis 7 drehbar gelagert ist.

## Claims

1. Device for the rotatable mounting of articles (1) about an axis of rotation (2), in particular of indicator devices in motor vehicles, **characterized in that** a basic body (4) with a radially open indentation (14) is provided, **in that** a rotary body (3) is provided for pushing into the indentation (14) in the radial direction and for rotatable mounting in the indentation (14), **in that** a shackle (9) is provided, by means of which the rotary body (3) can be locked against radial movements in the indentation (14), and **in that** the rotary body (3) can be coupled fixedly in terms of rotation to the article (1), so that, during the rotation of the article (1), the rotary body (3) co-rotates in the basic body (4), and **in that** the shackle (9) can be unlocked again by radial pivoting.

2. Device according to Claim 1, **characterized in that** the rotary body (3) has, in the axial direction, at least one first circular cross section and one second circular cross section different from the first, **in that** the indentation (14) of the basic body (4) has, in the axial direction, a third cross section which is at least partially essentially identical to the first cross section, and **in that** the indentation (14) of the basic body (4) has, in the axial direction, a fourth cross section which is at least partially essentially identical to the second cross section, so that the rotary body (3) can be secured against axial displacements in the indentation (14) of the basic body (4).

3. Device according to Claim 1 or 2, **characterized in that** the shackle (9) is mounted rotatably on the basic body (4).

4. Device according to one of Claims 1 to 3, **characterized in that** the indentation (14) of the basic body (4) is designed in the axial direction as a perforation (6), **in that** the basic body (4) is provided for fastening to a base element (5), and **in that** the surface (5a) of the base element (5) forms a radially running guide face for the rotary body (3).

5. Device according to Claim 4, **characterized in that** the surface (5a) of the base element (5) is made plane in the region of the guide face.

6. Device according to one of Claims 1 to 5, **characterized in that** the shackle (9) has a latching hook (10) which can be latched into a latching orifice (11) of the basic body (4).

7. Device according to one of Claims 1 to 6, **characterized in that** the rotary body (3) is produced in one piece with the article (1) and/or the basic body (4) is produced in one piece with the base element (5).

8. Electronic unit having a device according to one of Claims 1 to 7.

9. Navigational system having an indicator device which is mounted rotatably by means of a device according to one of Claims 1 to 7.

10. Television system of a motor vehicle, having an indicator device which is mounted rotatably by means of a device according to one of Claims 1 to 7.

## Revendications

1. Dispositif pour le montage d'objets (1) tournant autour d'un axe de rotation (2), en particulier de dispositifs d'affichages dans des véhicules automobiles,
**caractérisé**
- **en ce qu'**il est prévu un corps de base (4), comportant une encoche (14) ouverte en direction radiale,
- **en ce qu'**il est prévu un corps tournant (3) destiné à être introduit suivant la direction radiale dans l'encoche (14) et à y être monté à rotation,
- **en ce qu'**il est prévu un étrier de maintien (9) au moyen duquel le corps tournant (3) peut être verrouillé dans l'encoche (14) pour empêcher des déplacements radiaux, et
- **en ce que** le corps tournant (3) peut être couplé, fixe en rotation, avec l'objet (1), de telle façon que le corps tournant (3), en cas de rotation de l'objet (1), tourne avec lui en même temps dans le corps de base (4) et en ce que l'étrier de maintien (9) peut être de nouveau déverrouillé par un pivotement radial.

2. Dispositif suivant la revendication 1, **caractérisé**
- **en ce que** le corps tournant (3) présente dans la direction axiale au moins une première section circulaire et a moins une deuxième section circulaire différente de la première, en ce que l'encoche (14) du corps de base (4) présente, dans la direction axiale, une troisième section qui est, au moins en partie, essentiellement identique à la première section, et en ce que l'encoche (14) du corps de base (4) présente, dans la direction axiale, une quatrième section qui est, au moins en partie, essentiellement identique à la deuxième section, de telle façon que le corps tournant (3) peut être bloqué vis-à-vis des déplacements dans l'encoche (14) du corps de base (4).

3. Dispositif suivant la revendication 1 ou 2, **caractérisé en ce que** l'étrier de maintien (9) est monté à rotation sur le corps de base (4).

4. Dispositif suivant l'une des revendication 1 à 3, **caractérisé en ce que** l'encoche (14) du corps de base (4) est réalisée, dans la direction axiale, sous la forme d'un évidement traversant (6), **en ce que** le corps de base (4) est prévu pour la fixation sur un élément de base (5) et **en ce que** la surface (5a) de l'élément de base (5) forme une surface de guidage s'étendant radialement pour le corps tournant (3).

5. Dispositif suivant la revendication 4, **caractérisé en ce que** la surface (5a) de l'élément de base (5) est réalisée plane dans la zone de la surface de guidage.

6. Dispositif suivant l'une des revendications 1 à 5, **caractérisé en ce que** l'étrier de maintien (9) présente un crochet de blocage (10), qui peut être bloqué dans une ouverture de blocage (11) du corps de base (4).

7. Dispositif suivant l'une des revendications 1 à 6, **caractérisé en ce que** le corps tournant (3) forme une seule pièce avec l'objet (1) et/ou que le corps de base (4) forme une seule pièce avec l'élément de base (5).

8. Appareil électronique comportant un dispositif suivant l'une des revendications 1 à 7.

9. Système de navigation comportant un dispositif d'affichage qui est monté tournant au moyen d'un dispositif suivant l'une des revendications 1 à 7.

10. Système de télévision d'un véhicule automobile comportant un dispositif d'affichage qui est monté tournant au moyen d'un dispositif suivant l'une des revendications 1 à 7.
